# EUROPÄISCHE PATENTANMELDUNG

(11) **EP 4 435 542 A1**
(43) Veröffentlichungstag der Anmeldung: **25.09.2024**
(21) Anmeldenummer: 23162813.2
(22) Anmeldetag: 20.03.2023
(51) Int. Cl.: G05B 19/418

(54) **VERFAHREN ZUR AUTOMATISCHEN UNTERSTÜTZUNG DES INDUSTRIAL ENGINEERING, COMPUTERPROGRAMMPRODUKT ZUR DURCHFÜHRUNG DES VERFAHRENS UND VORRICHTUNG**

(71) Anmelder: Siemens Aktiengesellschaft, 80333 München (DE)
(72) Erfinder: Thon, Ingo, 85630 Grasbrunn (DE)
(74) Vertreter: Siemens Patent Attorneys

(57) **Zusammenfassung**

Das automatische Engineering der Datenerfassung und - darstellung für den Anwender ermöglicht es auch dem Data Scientist/AI und dem Prozessexperten, eigenständig zu arbeiten und verkürzt die Durchlaufzeit für die Erstellung einer Lösung erheblich, da nicht für jede Änderung an der Lösung mehrere Gewerke zusammengeführt werden müssen.

Dieser Vorteil wird vor allem durch die Verwendung eines Wissensgraphen und darin enthaltener horizontaler und nachgelagerter Konnektoren erreicht. Zusätzlich kann ein Knowledge Graph Reasoner die generierten Informationen nutzen.

## Beschreibung

Die industrielle Automatisierung befasst sich hauptsächlich mit der Automatisierung von Fertigungs-, Qualitätskontroll- und Materialflussprozessen. Zu den universellen Steuerungen für industrielle Prozesse gehören speicherprogrammierbare Steuerungen, eigenständige I/O-Module und Computer. Die industrielle Automatisierung soll das menschliche Handeln und die manuellen Befehls-Antwort-Aktivitäten in der Fertigung durch den Einsatz automatisierter Geräte und logischer Programmierbefehle ersetzen. Eine SPS oder auch SpeicherProgrammierbare Steuerung, oder in Englisch PLC für programmable logic controller, ist ein spezieller Computer, der vorrangig von der Industrie zu Steuer- und Regelungszwecken eingesetzt wird.

Industrial Engineering befasst sich mit der Optimierung dieser komplexen Prozesse, Systeme oder Organisationen durch die Entwicklung, Verbesserung und Implementierung integrierter Systeme von Menschen, Geld, Wissen, Informationen und Ausrüstung. Es umfasst die gesamten übergeordneten Aktivitäten der Ingenieure, die dazu dienen, die Entstehung einer Großanlage anzubahnen, zu konzipieren, zu entwickeln, herzustellen und in Betrieb zu nehmen.

Industrial Engineers, die auch die entsprechenden Engineering Werkzeuge bedienen, nutzen spezielle Kenntnisse und Fähigkeiten in den mathematischen, physikalischen und vielen anderen Wissenschaften, um mit den Prinzipien und Methoden der ingenieurtechnischen Analyse und Konstruktion die Ergebnisse von Systemen und Prozessen zu spezifizieren, vorherzusagen und zu bewerten. In der Fertigungsindustrie gibt es mehrere Prinzipien des Industrial Engineering, um den effektiven Ablauf der Systeme, Prozesse und Abläufe zu gewährleisten. Diese Prinzipien ermöglichen die Schaffung neuer Systeme, Verfahren oder Situationen für die sinnvolle Koordination von Arbeit, Material und Maschinen und verbessern auch die Qualität und Produktivität des Systems. Abhängig von den beteiligten Teildisziplinen kann sich das Industrial Engineering auch mit anderen Bereichen wie Betriebsforschung, Systems Engineering, Fertigungstechnik, Produktionstechnik, Lieferketten-Engineering, Management Engineering, Finanzielle Planung, Ergonomie oder Mitarbeiterplanung, Sicherheitstechnik, Logistik oder anderen überschneiden, abhängig vom Standpunkt oder den Motiven des Benutzers.

Da das Engineering einer Industrieanlage ein hochkomplexes Unterfangen ist, erfordert es Experten in allen Bereichen, um die verschiedenen Aufgaben zu bewältigen, so dass für IT-Experten aus anderen Bereichen, wie zum Beispiel die angehenden KI-Experten oder Data Scientists, die Arbeit im Kontext der industriellen Automatisierung immer noch sehr herausfordernd ist.

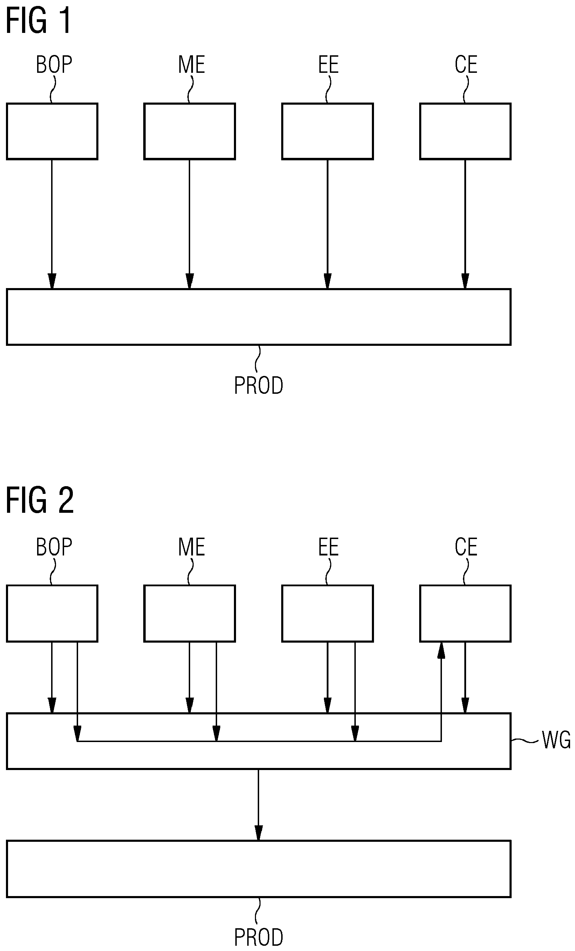

Die Figur 1 stellt ein solches Zusammenwirken schematisch da, wobei die einzelnen Gewerke allgemein wie folgt umfassen:
Produktionsprozessdesign, BOP
Maschinenbau Planung, ME
Elektrotechnik Planung, EE
Regelungstechnik, CE-Tool.

Edge-Systeme, wie beispielsweise die SINUMERIK Edge, werden derzeit entwickelt. Sie bieten eine maschinennahe Plattform für Applikationen (Apps), die die digitale Produktionsunterstützung und -optimierung ermöglichen.

Diese Systeme ermöglichen es den IT-Experten nach der Konfiguration des Abrufs mit Daten zu arbeiten, der Konfigurationsprozess selbst ist jedoch noch sehr komplex. Basierend auf diesen Systemen ist nicht die Erhebung der Daten die große Herausforderung, sondern die Identifizierung und die korrekte Erfassung der Daten.

### Stand der Technik

Das folgende beispielhafte Szenario wird zur Illustration der erfindungsgemäßen Aufgabe verwendet.

Vorgegeben ist eine Produktionsstätte, die mit ihren Produktionsmaschinen und -anlagen, Transport- und Lagereinrichtungen sowie deren Anordnung und Zusammenspiel (elektrische Verkabelung, Materialfluss, Produktionsprozess-Schritte, Wartungsintervalle usw.) innerhalb des gesamten Produktionsprozesses bereits vor einiger Zeit geplant wurde. Wie oben beschrieben, versucht ein Data Scientist ein Problem in einer Produktionsanlage zu untersuchen, indem er beispielsweise die verfügbaren Daten analysiert. Sobald der Data Scientist die richtigen Daten identifiziert hat, muss die Datenerhebung durchgeführt werden.

Ziel des Engineering-Prozesses ist es, die so ermittelten Daten auf einem System, zum Beispiel der bereits erwähnten Edge-Komponente, zur Verfügung zu stellen. Um die Abfrage der Daten in der Komponente zu konfigurieren, muss dabei der richtige SPS-Tag identifiziert werden.

Ein SPS-Tag ist ein Name, der einer Adresse eines Geräts/SPS zugewiesen ist. Je nach Hersteller des Geräts/SPS wird es auch "Variable" oder "Symbol" genannt.

Anschließend muss die Erfassung der Daten in der industriellen Komponente erfolgen, um die Informationen auf dem Datenbus bereitzustellen. Dies ist eine Aufgabe, die ein Data Scientist normalerweise nicht ausführen kann, da er nicht über das Know-how verfügt, mit Werkzeugen wie beispielsweise Mechatronics Designer, E-Plan oder dem TIA Portal umzugehen, welche die gesuchten Informationen enthalten.

In unserem Beispiel wird diese Aufgabe derzeit hauptsächlich von Experten auf diesem Gebiet durchgeführt, die speziell im Umgang mit den oben genannten Tools geschult sind.

In der Regel wird das Verfahren in drei Schritten durchgeführt:
1. Schritt:
   Identifizieren des Eingangsmoduls, an dem der Sensor angeschlossen ist. Hierfür gibt es zwei Möglichkeiten:
   - Dem Kabel (in der Anlage) folgen, das den Sensor mit dem Eingangsmodul verbindet. Aufgrund von Verdrahtungskanälen oder anderen Gründen ist dies allerdings oft nicht möglich. Oder
   - Öffnen des Mechatronik-Design Werkzeugs, um den Sensor zu identifizieren.
2. Schritt:
   Der Verbindung im elektronischen Design in der realen Anlage folgen, um den Eingangs-Port zu identifizieren, der den Sensor mit der Speicherprogrammierbaren Steuerung SPS verbindet.
3. Schritt:
   Identifizieren der SPS-Variable (Tag), die dem Eingangs-Port entspricht, durch Verwendung der Hardwarekonfiguration im Werkzeug.

Durch die Analyse des SPS-Programms kann die richtige Variable identifiziert werden, um den korrekt formatierten Wert erneut zu testen.

Dies ist jedoch derzeit ein vollständig manueller Prozess.

Es gibt Lösungsvorschläge für diesen Prozess, die jedoch eine vorausschauende Entwicklung der Semantik der Maschine erfordern. Dieses Vorgehen ist arbeitsintensiv und bietet an sich keinen Wert. Der Wert wird, in einem nachgelagerten Prozess, der Arbeit des Data Scientists oder KI-Experten, erbracht, der jedoch ohne die Vorabinvestition - das Engineering der semantischen Beschreibung - nicht möglich wäre. Daher ist eine solche Lösung auch für Brownfield - also bereits bestehende Anlagen - nicht anwendbar.

Aufgabe dieser Erfindung ist es, eine Lösung für die vorstehend genannten Probleme bereitzustellen, welche ohne Vorab-Aufwand in bestehenden Anlagen verwendet werden kann.

Die Aufgabe wird durch ein Verfahren mit den Merkmalen des unabhängigen Verfahrensanspruchs 1 gelöst.

Die Aufgabe wird auch durch ein Computerprogrammprodukt gemäß den Merkmalen des Anspruchs 9 gelöst.

Die Aufgabe wird ferner durch eine Vorrichtung mit den Merkmalen des unabhängigen Vorrichtungsanspruchs 10 gelöst.

Weitere Ausführungsformen der Erfindung sind in den unabhängigen Ansprüchen angegeben.

Zur Verdeutlichung der Erfindung sind Figuren beigefügt, die wie folgt darstellen:
Figur 1 die nach dem Stand der Technik bekannten Komponenten eines Engineering-Systems,
Abbildung 2 die Kommunikation der Komponenten gemäß der vorgeschlagenen Lösung
Abbildung 3 eine Verdeutlichung der verwendeten Gewerke und ihrer Kommunikation.

Die Erfindung soll durch ein Ausführungsbeispiel veranschaulicht werden, dieses ist jedoch nicht einschränkend für den Schutzbereich gemeint ist.

Die Beschreibung der Erfindung geht davon aus, dass bei der Einrichtung des Systems folgende Komponenten verwendet werden:
Produktionsprozessdesign BOP
Maschinenbau ME Werkzeug
Elektrotechnik EE Tool
Regelungstechnik CE-Tool.

Grundsätzlich nutzt jede Komponente (Gewerk) eigene digitale Engineering-Tools.

Die Informationen all dieser Engineering-Schritte werden in einem gemeinsamen Wissensgraphen gesammelt.

In der Wissensrepräsentation und -argumentation ist ein Wissensgraph eine Wissensdatenbank, die ein graphenstrukturiertes Data-Modell oder eine Topologie verwendet, um Daten zu integrieren.

Wissensgraphen setzen sich in der Regel aus Daten aus verschiedenen Quellen zusammen, die sich häufig in ihrer Struktur unterscheiden. Schemata, Identitäten und Kontext wirken zusammen, um unterschiedlichen Daten eine Struktur zu verleihen. Schemas bilden den Rahmen für den Wissensgraphen, Identitäten klassifizieren die zugrundeliegenden Knoten entsprechend und der Kontext bestimmt den Rahmen, in dem dieses Wissen vorliegt.

Wissensgraphen, die mithilfe von maschinellem Lernen erstellt werden, nutzen die Verarbeitung natürlicher Sprache (NLP), um durch einen Prozess, der als semantische Anreicherung bezeichnet wird, eine umfassende Übersicht über Knoten, Kanten und Beschriftungen zu erstellen. Wenn Daten eingelesen werden, ermöglicht dieser Prozess Wissensgraphen, einzelne Objekte zu identifizieren und die Beziehungen zwischen verschiedenen Objekten zu verstehen. Dieses Arbeitswissen wird dann mit anderen relevanten und ähnlichen Daten verglichen und integriert. Sobald ein Wissensgraph vollständig ist, ermöglicht er es Systemen zur Beantwortung von Fragen und zur Suche, umfassende Antworten auf unterschiedlichste Anfragen abzurufen und wiederzuverwenden.

Die Aktivitäten zur Datenintegration im Zusammenhang mit Wissensgraphen können auch zur Generierung von neuem Wissen beitragen, indem sie Verbindungen zwischen Datenpunkten herstellen, die zuvor möglicherweise nicht bekannt waren.

Nachgeschaltete Kollektoren und horizontale Konnektoren werden vom Produktionsprozessdesign, auch "Bill of Process" BOP genannt, bis zur Steuerungstechnik genutzt.

Ein "Knowledge Graph Reasoner" kann den generierten Wissensgraph verwenden, um die Datensammlung automatisch zu optimieren. Es handelt sich dabei um ein KI-fähiges System, das Fakten aus einem zugrunde liegenden Wissensgraphen basierend auf einer Reihe etablierter Axiome oder Regeln ableiten kann.

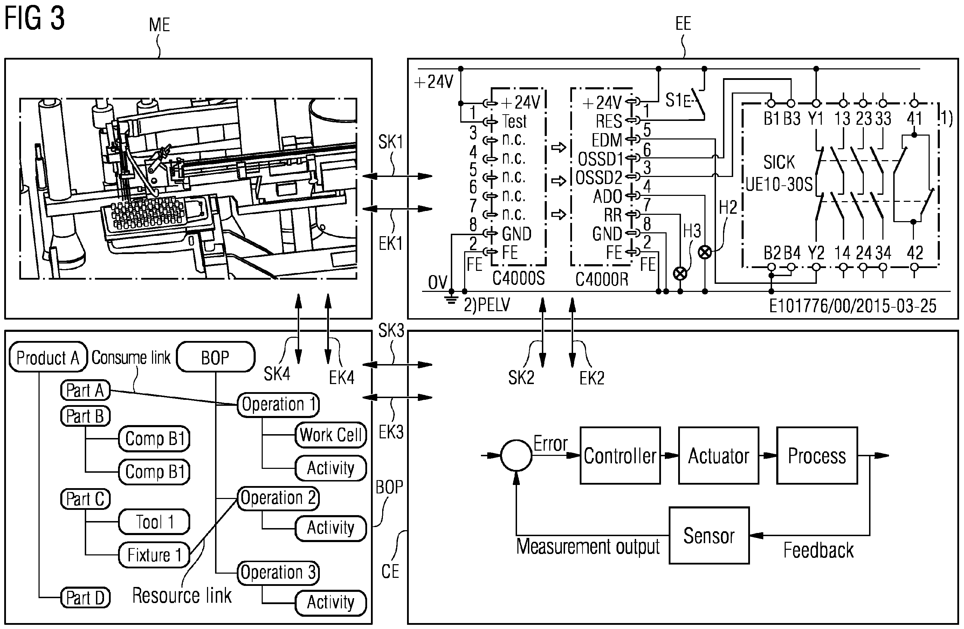

Figur 3 zeigt in einem Beispiel die Zusammenhänge zwischen den verschiedenen Gewerken. Für dieses Beispiel ist für das zu lösende Problem ein Lichtvorhang Teil des Systems der Anlage, der ein ereignisrelevantes Ereignis auslöst, zum Beispiel das Starten und Stoppen einer Produktionsmaschine.

Die ersten Komponenten unseres Systems sind die Engineering-Konnektoren EK1 - EK4. Ein Engineering-Konnektor EK stellt die Daten- und Engineering-Konsistenz im Engineering-Prozess zwischen verschiedenen Gewerken ME, CE, BOP und EE sicher, zum Beispiel dem Maschinenbau ME im Product Lifecycle Management-System (PLM-System, z. B. Team Center) und der Elektrotechnik EE der entsprechenden Lichtschranke.

Ein zweiter Konnektor, der Signalkonnektor SK, sorgt für die Konsistenz der Signale dieser beiden Engineering-Komponenten. Der Signalkonnektor SK1 zwischen mechanischem ME und elektronischem EE Engineering-Tool analysiert beispielsweise alle ausgetauschten Signale. Im Maschinenbautool wäre dies die Lichtschranke als Sensor und bei der elektrischen Verankerung die Anschlüsse am "C400r", der Sensor an der Lichtschranke. Wenn sowohl die Komponente des mechanischen Designs als auch das elektrische Design aus derselben Bibliothek stammen, können die Signale automatisch abgebildet werden. Andernfalls kann der Signalkonnektor SK jedoch die Konsistenz in einem vorgelagerten Engineering-Prozess sicherstellen.

Der Maschinenbauer wird gebeten, einen Sensor mit dem Modellnamen "C400R" auf ein Bauteil im mechanischen Design der Maschine abzubilden. Anschließend wird der Signalkonnektor SK2 zwischen Production Process Design BOP und Mechanical Design ME ausgelöst. Diese Komponente ermöglicht es dem Prozessingenieur, den Sensor auf den entsprechenden Produktionsprozess zu kommentieren. Nachdem die technischen Verbindungen hergestellt sind, werden die restlichen Komponenten hinzugefügt. In diesem Fall ist es die Verbindung zwischen der elektrischen Komponente "UE 10-30S" und dem Signal im Hardware Design in der Steuerungstechnik CE. Wenn die Namen der Signale und Komponenten nicht beeinflusst werden können, wird ein aussagekräftiges Mapping gespeichert, welches später vom nachgeschalteten Konnektor verwendet werden kann.

Während die Engineering-Konnektoren für Konsistenz zwischen den Engineering-Tools sorgen, exportiert der Signal-Konnektor die Informationen in einen gemeinsamen Wissensgraphen, d. h. eine Datenbasis, die folgende Informationen in einem Tripel speichert:
(<source>, <connection type>, <target>).

Die Quelle "source" und das Ziel "target" von Triple sind eindeutige Komponentenidentifikationen. Die Lichtschranke wird beispielsweise als "c400-1" und die Signale als "c400-1-ossd1" identifiziert. Die Identifikatoren werden dann z. B. aufgebaut als
(<component type>-<running number>-<identifier of the component >)

Alle eindeutigen Identifikatoren sind jedoch ausreichend. Die Konsistenz wird durch die vertikalen Anschlüsse gewährleistet. Im Fragment des elektrischen Plans gibt es eine Verbindung
(c400-1-ossd1, electrical, UE-10-30S-1-B3)

Zusätzlich würde in diesem Fall eine Verbindung zur entsprechenden et200-Komponente bestehen, z. B. ein et-200-DI Digitaleingang.
(UE-10-30S-1-B3, electrical, 6ES7131-6BF00-0CA0-1-DI1-1)

Da der Name nicht identisch mit dem Namen ist, der in der Leittechnik (z. B. Siemens TIA Portal) für die Kernobjekte verwendet wird, wird die virtuelle Abbildung aus der horizontalen Verbindung hinzugefügt.
(6ES7131-6BF00-0CA0-1-DI1-1, virtual, CO1-1-DI1-1).

Im Steuerungstechnik-Tool werden die Signale weiterverarbeitet bis eine "HMI sichtbare" Variable berechnet wird, wenn der Data Scientist eine Verbindung zum Signal haben möchte. Darüber hinaus generiert der nachgeschaltete Konnektor für Nicht-Engineering-Experten verständliche Darstellungen der Engineering-Informationen. In einer weiteren Ausführungsform der Erfindung könnten dies Bilder wie im Beispiel im Wissensgraph sein, annotiert mit der Position der Sensoren.

In einer weiteren Ausführungsform der Erfindung können Bilder auch 3D-Darstellungen sein. Ist die 3D-Darstellung ausreichend realistisch, kann ein Machine Learning/KI-Modell generiert werden, das es sogar erlaubt, den Sensor in der realen Welt zu identifizieren.

Wann immer der Data Scientist einen Datenpunkt von einem Sensor verwenden möchte, kann er auf den Sensor / das Signal in einem der oben genannten nicht-ingenieurkundigen lesbaren Formate zeigen. Anschließend stellt ein Reasoner die Verbindung zu potenziellen HMI-sichtbaren Signalen im Engineering-Tool her. Im nächsten Schritt werden die entsprechenden Verbindungen hergestellt. Das bedeutet, dass zunächst die Daten aus der SPS dem Edge-Datenbus zur Verfügung gestellt werden. Zweitens wird eine Anwendung generiert und am Edge bereitgestellt, die es dem Benutzer ermöglicht, die Daten zu beobachten, z. B. auf einem HMI, einer Webseite oder einem mobilen Gerät.

### Bezugszeichenliste:

- WG: Wissensgraph
- BOP: Produktions-Prozeßablauf, Prozeßdatendesign
- CE: Kontrollliste Regelungstechnik
- EE: Elektrotechnisch
- ME: Mechanisch
- PROD: Produktiv-System
- SK: Signalkonnektor
- EK: Engineeringkonnektor

## Patentansprüche

1. Computerimplementiertes Verfahren zur automatischen Unterstützung der Planung für eine Industrieanlage,
wobei ein verwendetes Engineering-System mindestens zwei voneinander getrennte Engineering-Bereiche enthält,
bei dem in einem ersten Schritt Engineering-System übergreifend eindeutige Komponentenidentifikatoren ermittelt werden und
in einem zweiten Schritt eine Signalverbindung zwischen zwei Gewerken ermittelt wird und die Daten der Signalverbindung in einem Triple von Informationen gespeichert werden, das aus den folgenden Informationen besteht:
- Komponente Signal- Quelle
- Verbindungstyp Komponenten
- Komponente Signal- Ziel,
wobei Signal-Quelle und Signal-Ziel jeweils eindeutige Komponentenidentifikatoren sind.

2. Verfahren nach den Merkmalen des Patentanspruchs 1,
**dadurch gekennzeichnet, dass**
die Engineering-Bereiche mindestens zwei der folgenden enthält:
- Elektrotechnik (EE),
- Maschinenbau (ME),
- Regelungstechnik (CE),
- Produktionsprozessdesign (BOP).

3. Verfahren nach den Merkmalen des Patentanspruchs 1 oder 2,
**dadurch gekennzeichnet, dass**
die Informationen in einem Wissensgraph gespeichert sind.

4. Verfahren nach den Merkmalen eines der vorherigen Patentansprüche, **dadurch gekennzeichnet, dass**
die eindeutigen Komponentenidentifikatoren als Tripel gespeichert werden, bestehend aus den folgenden Informationen:
- Komponententyp
- Sequenz-Nummer
- Identifikator der Komponente.

5. Verfahren nach den Merkmalen des Patentanspruchs 4,
**dadurch gekennzeichnet, dass**
die Signale und Komponenten in den Engineering-Bereichen nicht eindeutig sind und ein aussagekräftiges Mapping gespeichert wird.

6. Verfahren nach den Merkmalen eines der vorherigen Patentansprüche, **dadurch gekennzeichnet, dass**
ein Knowledge Graph Reasoner verwendet wird, um die gespeicherten Informationen automatisch zu optimieren.

7. Verfahren nach den Merkmalen eines der vorherigen Patentansprüche, **dadurch gekennzeichnet, dass**
aus dem Wissensgraph eine HMI sichtbare verständliche Darstellungen der Engineering-Informationen generiert wird.

8. Verfahren nach den Merkmalen eines der vorherigen Patentansprüche, **dadurch gekennzeichnet, dass**
die Informationen im Wissensgraph mit weiteren Informationen aus den Engineeringbereichen, insbesondere mit der Position der Komponenten innerhalb der Anlage, annotiert werden.

9. Computerprogrammprodukt geeignet zur Durchführung eines der Verfahren mit den Merkmalen gemäß Patentanspruch 1 bis 6.

10. Vorrichtung (WG) zur automatischen Unterstützung der Planung für eine Industrieanlage mit Komponenten,
wobei ein verwendetes Engineering-System mindestens zwei voneinander getrennte Engineering-Bereiche enthält,
wobei die Komponenten Engineering-System übergreifend eindeutige Komponentenidentifikatoren aufweisen, mit Speichermitteln zur Speicherung Daten der Signalverbindung zwischen den Komponenten in einem Triple von Informationen, das aus den folgenden Informationen besteht:
- Komponente Signal-Quelle
- Verbindungstyp
- Komponente Signal-Ziel,
wobei Signal-Quelle und Signal-Ziel jeweils durch eindeutige Komponentenidentifikatoren bezeichnet sind.

11. Vorrichtung (WG) nach den Merkmalen des Patentanspruchs 10,
**dadurch gekennzeichnet, dass**
die Engineering-Bereiche mindestens zwei der folgenden enthält:
- Elektrotechnik (EE),
- Maschinenbau (ME),
- Regelungstechnik (CE),
- Produktionsprozessdesign (BOP).

12. Vorrichtung (WG) nach den Merkmalen des Patentanspruchs 10 oder 11, **dadurch gekennzeichnet, dass**
die Informationen in einem Wissensgraph gespeichert sind.

13. Vorrichtung (WG) nach den Merkmalen eines der vorherigen Patentansprüche 10 bis 12, **dadurch gekennzeichnet, dass**
die eindeutigen Komponentenidentifikatoren als Tripel gespeichert werden, bestehend aus den folgenden Informationen:
- Komponententyp
- Sequenz-Nummer
- Identifikator der Komponente.

14. Vorrichtung (WG) nach den Merkmalen des Patentanspruchs 13,
**dadurch gekennzeichnet, dass**
die Signale und Komponenten in den Engineering-Bereichen nicht eindeutig sind und ein aussagekräftiges Mapping gespeichert wird.

15. Vorrichtung (WG) nach den Merkmalen eines der vorherigen Patentansprüche 10 bis 14, **dadurch gekennzeichnet, dass** ein Knowledge Graph Reasoner verwendet wird, um die gespeicherten Informationen automatisch zu optimieren.

16. Vorrichtung (WG) nach den Merkmalen eines der vorherigen Patentansprüche 10 bis 15, mit
einer Anzeigevorrichtung, welche eine aus dem Wissensgraph generierte, sichtbare verständliche Darstellung der Engineering-Informationen anzeigt.

17. Vorrichtung (WG) nach den Merkmalen eines der vorherigen Patentansprüche 10 bis 16, **dadurch gekennzeichnet, dass** die Informationen im Wissensgraph mit weiteren Informationen aus den Engineeringbereichen, insbesondere mit der Position der Komponenten innerhalb der Anlage, annotiert sind.
